# EUROPEAN PATENT SPECIFICATION

(11) **EP 3 315 381 B1**
(45) Date of publication and mention of the grant of the patent: **11.03.2020**
(21) Application number: 16857499.4
(22) Date of filing: 20.10.2016
(51) Int. Cl.: B62D 1/184, B62D 1/185, B62D 1/187

(54) **OUTER COLUMN WITH BRACKET, STEERING COLUMN WITH BRACKET, AND STEERING DEVICE**
AUSSENSÄULE MIT KONSOLE, LENKSÄULE MIT KONSOLE UND LENKVORRICHTUNG
COLONNE EXTERNE AVEC SUPPORT, COLONNE DE DIRECTION AVEC SUPPORT ET DISPOSITIF DE DIRECTION

(30) Priority: 22.10.2015 JP 2015207964
(43) Date of publication of application: 02.05.2018
(73) Proprietor: NSK Ltd., Tokyo 141-8560 (JP)
(72) Inventor: KUROKAWA, Yoshifumi, Maebashi-shi Gunma 371-8527 (JP)
(74) Representative: Mewburn Ellis LLP
(86) International application number: PCT/JP2016/081062
(87) International publication number: WO 2017/069186

(56) References cited:
- WO-A1-2009/157294
- JP-A- 2009 202 636
- JP-A- 2011 105 122
- JP-A- 2011 105 122
- JP-A- 2012 171 480
- US-A1- 2010 294 072

## Description

### TECHNICAL FIELD

The present invention relates to a steering device capable of adjusting an upper-lower position of a steering wheel, an improvement of an outer column with a bracket and a steering column with a bracket which are components of the steering device.

### BACKGROUND ART

A steering device for automobiles has been known as described in, for example, Patent Document 1 and the like. The steering device for automobiles is configured, as shown in FIGS. 14 and 15, such that rotation of a steering wheel 1 is transmitted to an input shaft 3 of a steering gear unit 2, and a pair of left and right tie rods 4, 4 are pulled and pushed according to the rotation of the input shaft 3, and a steering angle is provided to wheels (front wheels). The steering wheel 1 is supported and fixed on a rear end portion of a steering shaft 5, and the steering shaft 5 is rotatably supported to a steering column 6 in a state where the steering shaft 5 is inserted into the steering column 6 in an axial direction. A front end portion of the steering shaft 5 is connected to a rear end portion of an intermediate shaft 8 through a universal joint 7, and a front end portion of the intermediate shaft 8 is connected to the input shaft 3 through another universal joint. In this specification and claims, a front-rear direction, a left-right (width) direction, and an upper-lower direction refers to a front-rear direction, a left-right (width) direction, and an upper-lower direction of a vehicle, unless particularly otherwise mentioned.

In this steering device, there has been known a tilt mechanism for adjusting an upper-lower position of the steering wheel 1 and a telescopic mechanism for adjusting a front-rear position of the steering wheel 1 according to a physique or a driving position of a driver. The steering column 6 configuring the tile mechanism is supported to a vehicle body 10 so as to pivotably displaceable about a pivot shaft 11 mounted in the width direction. In order to configure the telescopic mechanism, the steering column 6 is configured such that an outer column 12 and an inner column 13 are fitted with each other so as to relatively displaceable in the axial direction (telescopically combined), a steering shaft 5 is configured such that an outer shaft 14 and an inner shaft 15 are combined to transmit torque and to be telescopic by a spline engagement and the like. A column side bracket 16 fixed to the outer column 12 is supported to a vehicle body side bracket 17 supported to the vehicle body 10 so as to displaceable in the upper-lower direction and the front-rear direction. An example in the drawings incorporates an electric assistant device configured to reduce a force necessary to operate the steering wheel 1 by using an electric motor 18 as an auxiliary power source.

In a case where the tilt mechanism or the telescopic mechanism is a structure of a manual type except an electric type, a state where a position of the steering wheel 1 can be adjusted and a state where the steering wheel 1 can be fixed to an adjusted position based on an operation of an adjustment lever can be switched. As the structure of the tilt mechanism or telescopic mechanism of the manual type, various structures have been known and implemented.

For example, in a case of the above-described structure, the column side bracket 16 fixed to the outer column 12 is formed with a telescopic adjustment long hole 19 which extends in an axial direction of the outer column 12. The vehicle body side bracket 17 has a pair of support plate parts 20 configured to interpose therebetween the column side bracket 16 from both sides in the width direction, and tilt adjustment long holes 21 which extends in the upper-lower direction respectively are formed at portions of the support plate parts 20 facing each other. The two tilt adjustment long holes 21 each have generally a partial arc shape having the pivot shaft 11 as a center. An adjustment rod 22 is inserted into the two tilt adjustment long holes 21 and the telescopic adjustment long hole 19. A pair of pressing part 23a, 23b is provided at both end portions of the adjustment rod 22, which protrude from outer side surfaces of both support plate parts 20 in the width direction, and an interval between the two pressing part 23a, 23b is expanded and contracted by an expansion and contraction device based on an operation of an adjustment lever 24.

When adjusting an upper-lower position or a front-rear position of the steering wheel 1, the interval between the pressing parts 23a, 23b is expanded based on the operation of the adjustment lever 24. Accordingly, frictional force acting between an inner side surface of the two support plate parts 20 in the width direction and two outer side surfaces of the column side bracket 16 in the width direction is reduced. At this state, the adjustment rod 22 adjusts a position of the steering wheel 1 within a range displaceable in the two tilt adjustment long holes 21 and the telescopic adjustment long hole 19. After the adjustment, the interval between the pressing parts 23a, 23b is contracted based on the operation of the adjustment lever 24. Accordingly, the frictional force is increased to hold the steering wheel 1 at an adjusted position.

In a case of the above-described structure, there is room for improvement from an aspect of improving rigidity of the steering column 6 in a state where the steering wheel 1 is held at the adjusted position. That is, in a case of the above-described structure, a structure is adopted in which the two side surfaces in the width direction of the column side bracket 16 fixed to the outer column 12 are sandwiched by the pair of the support plate parts 20 configuring the vehicle body side bracket 17. In this case, the outer column 12 itself is not expanded and contracted. Accordingly, even in a case where the steering wheel 1 is held at the adjusted position, compared with a state before holding, a gap existing between an inner peripheral surface of the outer column 12 and an outer peripheral surface of the inner column 13 is not reduced. Therefore, the frictional force acting between the both peripheral surfaces is not increased. In contrast, if the structure in which the frictional force acting between the two peripheral surfaces is increased is realized as the steering wheel 1 is held at the adjusted position, the rigidity of the steering column 6 can be improved. Furthermore, the frictional force can also be used for absorbing a shock load to be applied to the driver upon a secondary collision.

Patent Document 2 discloses a steering device for a vehicle in which the telescopic operability and column rigidity is ensured by welding of the column side bracket to the outer column. An inner column and an outer column are mutually slidably fitted in the axial direction, rotatably support a steering shaft. The outer column is formed in a shape of arranging contact parts slidably contacting with the outer periphery of the inner column and noncontact parts of not contacting by arranging a clearance between the outer periphery of the inner column and itself in a position separate in the peripheral direction to these contact parts. The outer column includes slits. The column side bracket is fixed by welding to the outer periphery of the noncontact parts arranged on the outer column. The column side bracket has adjustment holes formed through it.

Patent Document 3 discloses a telescopic steering column with a positional adjustment capability.

### BACKGROUND ART DOCUMENT

### PATENT DOCUMENT

Patent Document 1: JP-2000-127987
Patent Document 2: JP-2011-105122
Patent Document 3: US 2010/0294072

### SUMMARY OF THE INVENTION

### PROBLEM TO BE SOLVED

The present invention has been made in view of the above described circumstances, and has been made to realize a structure capable of increasing the frictional force acting between an inner peripheral surface of an outer column and an outer peripheral surface of an inner column as a steering wheel is held at an adjusted position.

### MEANS FOR SOLVING THE PROBLEM

An outer column with a bracket of the present invention includes a tubular outer column and a column side bracket fixed to the outer column, with the configuration as set out in claim 1.

The outer column includes slits configured to lower a rigidity of the outer column in a radial direction and expanding and contracting the outer column. The slits are provided on both side portions in a width direction, which interpose a central portion in the width direction on a half portion of one side in an upper-lower direction, of the outer column, in a state where the slits extend only in an axial direction respectively.

The column side bracket includes a pair of side wall parts which fixed to positions, which interpose each of the slits therebetween from both sides in the width direction, of an outer peripheral surface of the outer column and a penetration hole provided on portions, which face each other in the width direction, of the two side wall parts.

When implementing the outer column with the bracket of the present invention, for example, a plurality of the slits may be provided separately in the axial direction on two side portions in the width direction, which interpose a central portion in the width direction, of the outer column. In addition, the two side wall parts may be fixed to the outer peripheral surface of the outer column at a plurality of portions located at same positions as the slits in an axial direction of the outer column.

Welding parts are provided to fix the two side wall parts to the outer peripheral surface of the outer column respectively in a state where the welding parts bridge between (i) portions, which is adjacent to an opposite side of the slits in the circumferential direction with respect to the two side wall parts, of the outer peripheral surface of the outer column and (ii) the two side wall parts.

When implementing the outer column with the bracket of the present invention, for example, outer side surfaces of the two side wall parts in the width direction configure a vehicle side bracket supported to a vehicle body, and are pressed by inner side surfaces in the width direction of a pair of support plate parts, and the pair of support plate parts are separated in the width direction. Outer side surfaces of the two side wall parts in the width direction may be inclined in a direction facing an outer side in the width direction as it goes from an end edge on a side far from the outer column in an upper-lower direction toward an end edge on a side close to the outer column in the upper-lower direction.

When implementing the outer column with the bracket of the present invention, for example, the penetration hole may be a telescopic adjustment long hole which extends in the axial direction of the outer column.

When implementing the outer column with the bracket of the present invention, for example, an intermediate portion of the slit in a longitudinal direction may be formed with a constant circumferential width, and both end portions of the slit in the longitudinal direction may be formed such that a circumferential width is narrowed toward both end edges in the longitudinal direction.

A steering column with the bracket of the present invention includes a tubular inner column and the above-described outer column with the bracket. The outer column is externally fitted to the inner column in an axial position where the column side bracket exists so that the outer column is relatively displaceable with respect to the inner column.

When implementing the outer column with the bracket of the present invention, for example, in the axial position where the column side bracket exists, an inner peripheral surface of the outer column and an outer peripheral surface of the inner column are brought into contact with each other directly or through other members only at a plurality of positions separated in the circumferential direction, and positions where the inner peripheral surface of outer column and the outer peripheral surface of the inner column are brought into contact with each other directly or through other members and positions where the two side wall parts are fixed to the outer peripheral surface of the outer column may be shifted with each other in the circumferential direction.

When implementing the outer column with the bracket of the present invention, for example, the inner peripheral surface of the outer column and the outer peripheral surface of the inner column may be brought into contact with each other through a sandwiched member made of synthetic resin.

A steering device of the present invention includes the above-described steering column with the bracket, a vehicle side bracket, an adjustment rod, a pair of pressing part, and an expansion/contraction mechanism.

The vehicle body side bracket is supported to the vehicle body. The vehicle body side bracket includes a pair of support plate parts provided on positions where the column side bracket is interposed therebetween from both sides in the width direction, and through holes provided on portions, which face each other in the width direction, of the two support plate parts.

The adjustment rod is inserted into the two penetration holes and two through holes.

The pair of the pressing parts provided on both end portions, which protrude from the outer side surfaces of the two support plate parts in the width direction, of the adjustment rod.

The expansion/contraction mechanism is capable of expanding and contracting an interval between the pressing parts.

### EFFECTS OF THE INVENTION

According to the outer column with the bracket of the present invention having such a configuration, the steering column with the bracket and the steering device, it is possible to increase the frictional force acting between the inner peripheral surface of the outer column and the outer peripheral surface of the inner column as the steering wheel is held at the adjusted position.

That is, in a case of the present invention, the outer column includes slits for lowering the rigidity of the outer column in the radial direction provided on both side portions in the width direction which interpose the central portion in the width direction on the half portion of the one side in the upper-lower direction in a state where the slits only extend in the axial direction respectively. A pair of side wall parts configuring the column side bracket is fixed to positions, which interpose each of the slits therebetween from both sides in the width direction, of the outer peripheral surface of the outer column. Therefore, in a case where the interval between the pair of pressing parts is contracted and the two side wall parts are pressed from both sides in the width direction through the pair of support plate parts configuring the vehicle body side bracket so as to hold the steering wheel at the adjusted position, it is possible to elastically and effectively contract a diameter of a portion of the outer column. In this portion with the contracted diameter, the inner peripheral surface of the outer column and the outer peripheral surface of the inner column can be brought into strong contact with each other and the frictional force acting between the two peripheral surfaces can be increased.

### BRIEF DESCRIPTION OF THE DRAWINGS

FIG. 1 is partial side view illustrating a first embodiment of the present invention.
FIG. 2 is an enlarged cross-sectional view taken along a line A-A of FIG. 1, illustrating the first embodiment.
FIG. 3 is a partial side view of a steering column with a bracket, illustrating the first embodiment.
FIG. 4 is an enlarged cross-sectional view taken along a line B-B of FIG. 3, illustrating the first embodiment.
FIG. 5 is an enlarged sectional view taken along a line C-C of FIG. 3, illustrating the first embodiment.
FIG. 6 is similar to FIG. 3, illustrating a structure in a Comparative Example.
FIG. 7 is an enlarged cross-sectional view taken along a line D-D of FIG. 6, illustrating a structure in the Comparative Example.
FIG. 8 is similar to FIG. 3, illustrating a second embodiment of the present invention.
FIG. 9 is similar to FIG. 2, illustrating a third embodiment of the present invention.
FIG. 10 is similar to FIG. 2, illustrating a fourth embodiment of the present invention.
FIG. 11 is similar to FIG. 2, illustrating a fifth embodiment of the present invention.
FIG. 12 is similar to FIG. 2, illustrating a sixth embodiment of the present invention.
FIG. 13 is similar to FIG. 2, illustrating a seventh embodiment of the present invention.
FIG. 14 is a schematic partially sectional side view illustrating an example of a conventional steering device.

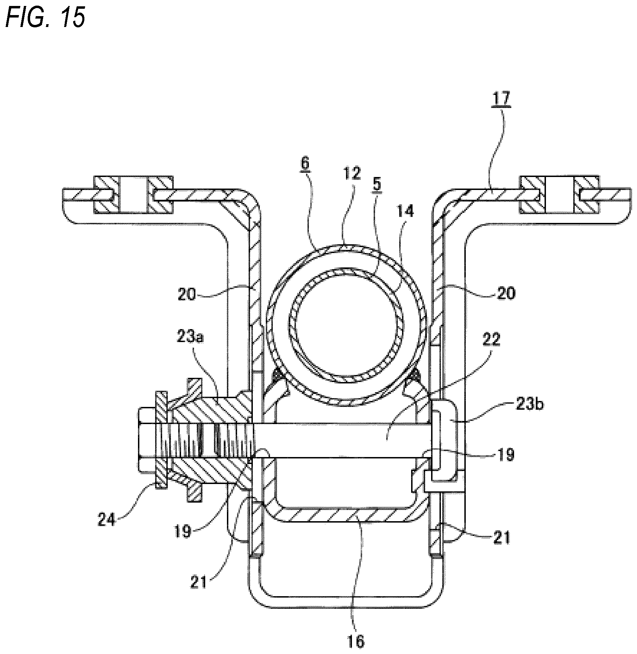

FIG. 15 is a cross-sectional view taken along a line E-E of FIG. 14.

### DETAILED DESCRIPTION OF EMBODIMENTS

### [FIRST EMBODIMENT]

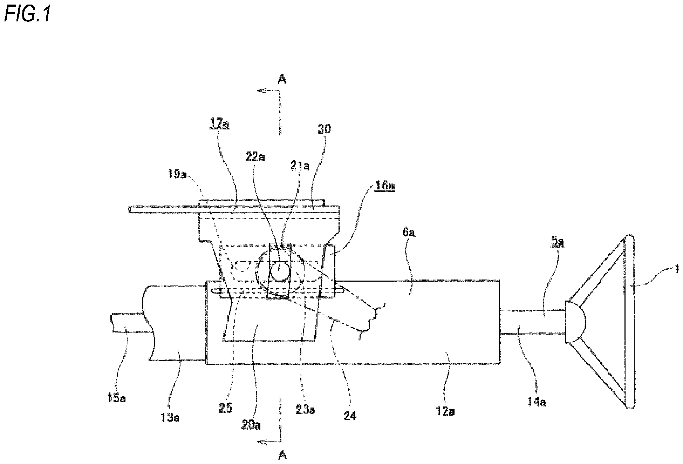

A first embodiment of the present invention will be described with reference to FIGS. 1 to 5.

The steering device of the embodiment includes a steering column 6a, a column side bracket 16a, a steering shaft 5a, a vehicle body side bracket 17a, an adjustment rod 22a, a pair pf pressing parts 23a, 23b, and an adjustment lever 24.

The steering column 6a is formed such that a front portion of a cylindrical outer column 12a arranged on a rear side is externally fitted to a rear portion of a cylindrical inner column 13a arranged on a front side so as to relatively displaceable in an axial direction.

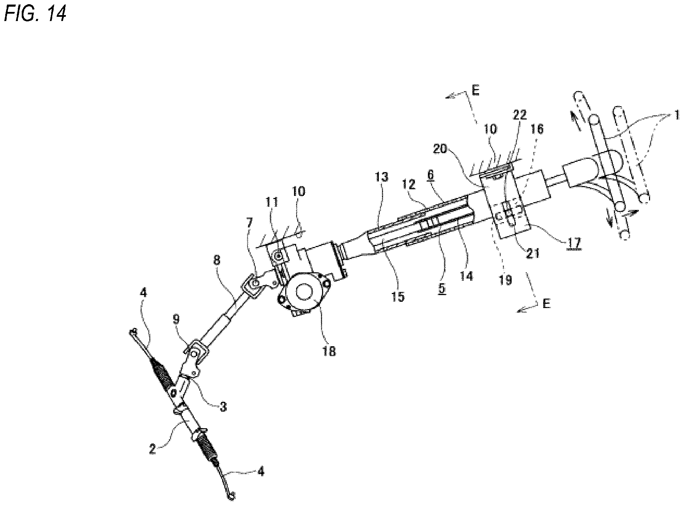

A front end portion of the inner column 13a is supported to a vehicle body so as to pivotably displaceable about a pivot shaft 11 disposed in a width direction (refer to FIG. 14).

The outer column 12a is made of steel. On a front half portion of this outer column 12a (a portion externally fitted to the rear portion of the inner column 13a), a pair of slits 25, 25 for lowering the rigidity of the outer column 12a in a radial direction and expanding/contracting the outer column 12a are provided on both side portions in the width direction (two end side portions in the width direction) which interpose a central portion in the width direction on an upper half portion of the outer column 12a in a state where the slits 25, 25 only extend in the axial direction respectively. Front end portions of the two slits 25, 25 are not opened to a front end edge of the outer column 12a.

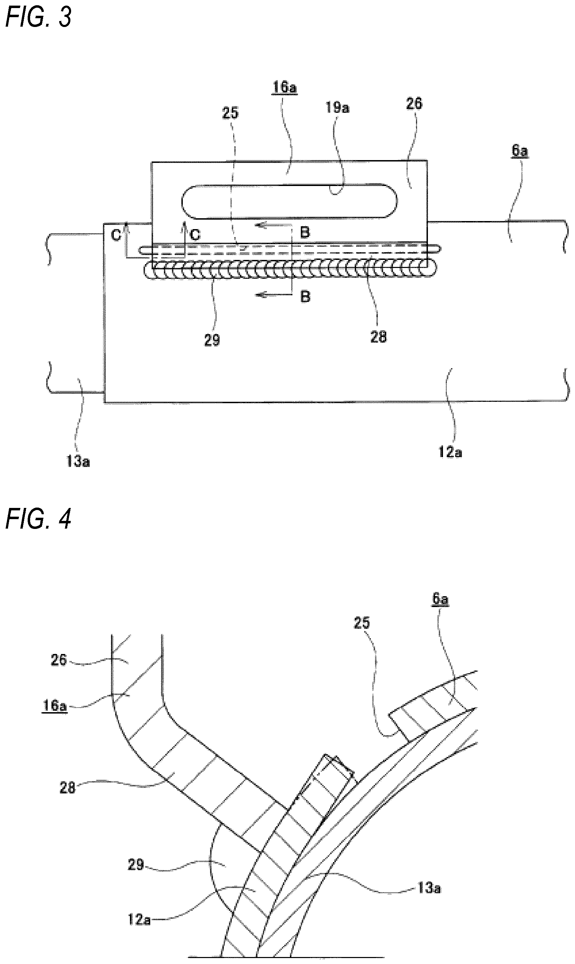

A column side bracket 16a is configured to have a substantially C shape viewed from the axial direction by bending the steel and is fixed to a front portion on the front half portion of the outer column 12a by welding. This column side bracket 16a includes a pair of side plate parts 26, 26 which are separated from each other in the width direction and parallel to each other, a connecting plate part 27 which connects upper end edge portions of the two side plate parts 26, 26, and coupling plate parts 28, 28 which are inclined in a direction toward an inner side in the width direction downward in a state of connecting from lower end edge portions of the two side plate parts 26, 26. In a case of the embodiment, a pair of "the side plate parts 26 and the coupling plate parts 28" configuring two end portions of the column side bracket 16a in the width direction correspond to a pair of side wall parts of the present invention. Lower end portions of the two coupling plate parts 28, 28 are fixed to positions, where intermediate portions of the two slits 25, 25 in a longitudinal direction are interposed from both sides in the width direction, of an outer peripheral surface of outer column 12a by welding in a state of contact with each other. For this end, in a case of the embodiment, welding parts (welding metals) 29, 29 are formed respectively in a state such that the welding parts 29, 29 bridge between portions, which is adjacent to the two slits 25, 25 and opposite sides of the two slits 25, 25 in a circumferential direction with respect to the two coupling plate parts 28, 28, of the outer peripheral surface of the outer column 12a and the lower end portions of the coupling plate parts 28, 28. As a result, in a case of the embodiment, based on thermal contraction of the welding parts 29, 29, as shown in FIG. 4, portions, which is adjacent to one side edges (side edges of the welding parts 29, 29) of the slits 25, 25 in the width direction, of the outer column 12a are elastically deformed so as to retreat radially outward respectively. Hereby, an inner peripheral surface of the each portion, which is adjacent to one side edges of the slits 25, 25 in the width direction, of the outer column 12a rises from the outer peripheral surface of the inner column 13a. Telescopic adjustment long holes 19a, 19a, which extend in the axial direction of the outer column 12a and are penetration holes of the present invention, are provided on portions, which faces each other in the width direction, of two side plate parts 26, 26,.

In a case of the embodiment, the outer column 12a in which the column side bracket 16a is fixed corresponds to the outer column with the bracket of the present invention, one in which this outer column with the bracket and the inner column 13a are combined corresponds to the steering column with the bracket of the present invention.

The steering shaft 5a is configured such that an outer shaft 14a and an inner shaft 15a are combined to transmit torque and to be telescopic by a spline engagement and the like. In the steering shaft 5a, an intermediate rear side portion of the outer shaft 14a is supported to the rear end portion of the outer column 12a and an intermediate front side portion of the inner shaft 15a is supported to the front end portion of the inner column 13a by a rolling bearing capable of bearing radial load and thrust load, such as a single-row, deep-groove radial ball bearing. Therefore, the steering shaft 5a is configured to expand and contract as the steering column 6a expands and contracts. A steering wheel 1 is supported and fixed to a portion which protrudes rearward from a rear end opening of the outer column 12a at a rear end portion of the outer shaft 14a.

The vehicle body side bracket 17a has a mounting plate part 30 for supporting the bracket 17 to a vehicle body and a pair of support plate parts 20a, 20a hanging down from a lower surface of the mounting plate part 30 and parallel with each other. Tilt adjustment long holes 21a, 21a which extend in the upper-lower direction respectively are provided on portions of the two support plate parts 20a, 20a facing each other. In a case of the embodiment, the two tilt adjustment long holes 21a, 21a each have generally a partial arc shape having the pivot shaft 11 as a center. In a case of the embodiment, the two tilt adjustment long holes 21a, 21a corresponds to the through holes of the present invention. This vehicle body side bracket 17a is supported to the vehicle body such that the vehicle body side bracket 17a can be dropped off forwards by a shock load applied upon a secondary collision in a state where the two support plate parts 20a, 20a are arranged on positions where the column side bracket 16a is interposed from both sides in the width direction.

The adjustment rod 22a is inserted into two telescopic adjustment long holes 19a, 19a and two tilt adjustment long holes 21a, 21a. An expansion/contraction mechanism is configured such that the pressing parts 23a, 23b are provided at both end portions of the adjustment rod 22a, which protrude from outer side surfaces of the support plate parts 20a, 20a in the width direction, and an interval between the pressing parts 23a, 23b can be expanded and contracted by the adjustment lever 24. A structure of this expansion/contraction mechanism is not particularly limited. For example, as shown in the drawings, a cam type structure capable of expanding and contracting the size in the axial direction by engagement of a pair of cam surfaces provided on side surfaces of one pressing part (driven-side cam) 23a and a drive-side cam 31 opposing each other or a screw type structure in which a nut is screwed to a male screw part formed at an end portion of the adjustment rod 22a may be adopted. In any structure, the adjustment lever 24 is provided on the end portion of the adjustment rod 22a. The adjustment lever 24 is rotated about the adjustment rod 22a, thereby the interval between the two pressing parts 23a, 23b is expanded and contracted.

In a case of the embodiment, when adjusting a front-rear position or an upper-lower position of steering wheel 1, the adjustment lever 24 is rotated in a predetermined direction (generally, a downward direction), thereby the interval between the two pressing parts 23a, 23b is expanded. As a result, an inner diameter of the front half portion of the outer column 12a is elastically expanded due to the slits 25, 25 of the column side bracket 16a, so that a surface pressure of a fitting portion between the inner peripheral surface of the outer column 12a and the outer peripheral surface of the inner column 13a is reduced or lost. At the same time, surface pressures of the contact portions between outer side surfaces of a pair of side plate parts 26, 26 in the width direction configuring the column side bracket 16a and inner side surfaces of the pair of the support plate part 20a, 20a in the width direction configuring the vehicle body side bracket 17a are respectively reduced or lost. At this state, the adjustment rod 22a adjusts the position of the steering wheel 1 within the range displaceable in the telescopic adjustment long holes 19a, 19a and the two upper-lower direction long holes 21a, 21a. After the adjustment, the adjustment lever 24 is rotated in a reverse direction (generally, an upward direction) to the predetermined direction, thereby the interval between the pressing parts 23a, 23b is contracted. Accordingly, the frictional force is increased to hold the steering wheel 1 at an adjusted position.

Specifically, in a case of the steering device of the embodiment, as the steering wheel 1 is held at the adjusted position, the frictional force acting between the inner peripheral surface of the outer column 12a and the outer peripheral surface of the inner column 13a is increased.

That is, in a case of the embodiment, The pair of slits 25, 25 for lowering the rigidity of the outer column 12a in a radial direction are provided on both side portions in the width direction, which interpose the central portion in the width direction on the upper half portion, of the half portion of the outer column 12a, in a state where the slits 25, 25 only extend in the axial direction respectively. The pair of the slits 25, 25 is formed to be longer than axial lengths of the pair of the side plate parts 26, 26, and axial end portions of the pair of the slits 25, 25 are positioned axially outward from both axial ends of the pair of side plate portions 26, 26 respectively. The pair of the coupling plate parts 28, 28 configuring the column side bracket 16a are fixed to positions, where the two slits 25, 25 are interposed from both sides in the width direction, of the outer peripheral surface of the outer column 12a,. Therefore, since the interval between the pair of pressing parts 23a, 23b is contracted so as to hold the steering wheel at the adjusted position, in a case where the two side wall parts 26, 26 connected to the two coupling plate parts 28, 28 are pressed from both sides in the width direction through the two support plate parts 20a, 20a, it is possible to elastically and effectively contract a diameter of a front half portion of the outer column 12a. Specifically, in a case of the embodiment, since the slits 25, 25 are provided on both side portions (portions a vicinity of the two coupling plate parts 28, 28), which is on the upper half portion in the width direction, of the front half portion of the outer column 12a, for example, compared with a case where the slits are provided on the central portion (a portion far from the two coupling plate parts 28, 28) of the front half portion in the width direction, it is possible to elastically and effectively contract a diameter of the front half portion of the outer column 12a. The inner peripheral surface of the outer column 12a and the outer peripheral surface of the inner column 13a can be brought into strong contact with each other on the portion with the contracted diameter, and the frictional force acting between the two peripheral surfaces can be increased. As a result, the rigidity of the steering column 6a can be improved in a state where the steering wheel 1 is held at the adjusted position.

Furthermore, in a case of the embodiment, based on the frictional force acting between the inner peripheral surface of the outer column 12a and the outer peripheral surface of the inner column 13a in a state where the steering wheel 1 is held at the adjusted position,, it is possible to absorb the shock load applied to the driver upon a secondary collision, and variation of the performance for absorbing such a shock load can be suppressed.

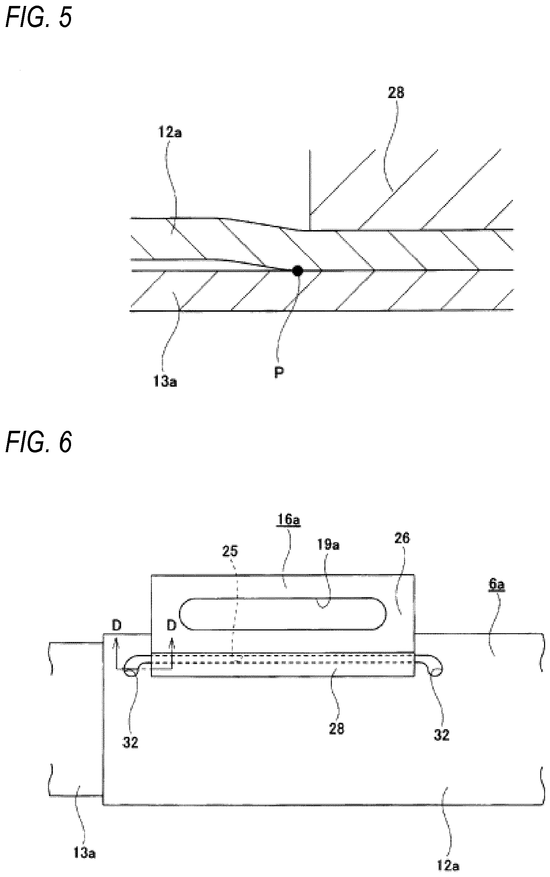

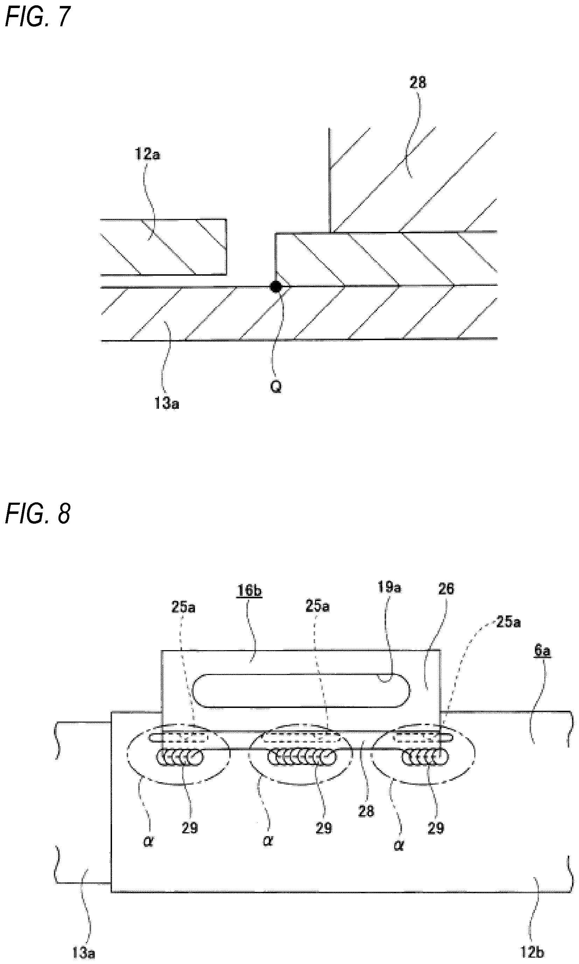

That is, as a structure in a Comparative Example shown in FIG. 6, when peripheral extending parts (peripheral slits) 32, 32 which extend in a peripheral direction respectively are provided on both end portions of the slits (axial slits) 25, 25 in front-rear direction formed on the outer column 12a, , an edge load is added to both end edge portions (Q portions shown in FIG. 7) in the front-rear direction, which is of a portion interposed between the two peripheral extending parts 32, 32 in the width direction, of a contact portion of the inner peripheral surface of the outer column 12a and the outer peripheral surface of the inner column 13a. The magnitude of the edge load greatly varies based on error in size and shape of each component configuring the steering device. During a sliding of the inner column 13a and the outer column 12a due to the secondary collision at the front end edge portion, which is a portion interposed between the two peripheral extending parts 32, 32, of the contact portion of the inner peripheral surface of the outer column 12a and the outer peripheral surface of the inner column 3a, the front end edge of the inner peripheral surface of the outer column 12a tends to bite into the outer peripheral surface of the inner column 13a on the Q portion shown in FIG. 7. The biting mode varies greatly based on error in size and shape of each component configuring the steering device. Therefore, in a case of the structure in the Comparative Example described above, sliding characteristics of the inner column 13a and the outer column 12a upon the secondary collision vary greatly. Thus, in a case of the structure in the Comparative Example described above, based on the frictional force acting between the inner peripheral surface of the outer column 12a and the outer peripheral surface of the inner column 13a, the performance for absorbing the shock load applied to the driver upon the secondary collision is easy to vary greatly.

In a case of the embodiment, the slits 25, 25 formed on the outer column 12a are provided in a state where the slits 25, 25 only extend in the axial direction. That is, intermediate portions of the slits 25, 25 in the longitudinal direction are formed with a constant circumferential width, and both end portions of the slits 25, 25 in the longitudinal direction are formed such that a circumferential width is narrowed toward both end edges in the longitudinal direction. Therefore, circumferential widths of the slits 25, 25 are formed not more than circumferential widths of the intermediate portions in the longitudinal direction over the entire axial length the slits 25, 25. Accordingly, as shown in P portion of FIG. 5, both end edge portions in the front-rear direction, which is a portion positioned between the two end edges of each slit 25 in the longitude direction with respect to the axial direction, of the contact portion of outer peripheral surface of the inner column 13a and the inner peripheral surface of the outer column 12a are brought into contact with each other in the non-edge portions, and the edge load does not act on the both end portions in the front-rear direction. During the sliding of the inner column 13a and the outer column 12a due to the secondary collision at the front end edge portion, which a portion positioned between the two end edges of each slit 25 in the longitude direction with respect to the axial direction, of the contact portion of the inner peripheral surface of the outer column 12a and the outer peripheral surface of the inner column 13a, the front end edge of the inner peripheral surface of the outer column 12a does not bite into the outer peripheral surface of the inner column 13a on the P portion shown in FIG. 5. Therefore, variation of sliding characteristics of the inner column 13a and the outer column 12a upon the secondary collision can be suppressed. As a result, in a case of the embodiment, based on the frictional force acting between the inner peripheral surface of the outer column 12a and the outer peripheral surface of the inner column 13a, the performance for absorbing the shock load applied to the driver upon a secondary collision is difficult to vary.

In a case of the embodiment, as shown in FIG. 4, portions, which is adjacent to one side edges (side edges of the welding parts 29, 29) of the two slits 25, 25 in the width direction, of the outer column 12a are elastically deformed so as to retreat radially outward respectively, and an inner peripheral surface of each portion rises from the outer peripheral surface of the inner column 13a. Accordingly, it can be prevented that inner end edges in the width direction of the inner peripheral surface of these portions are brought into strong contact with the outer peripheral surface of the inner column 13a, and it can be prevented that the edge load is added to the contacted portions. Thus, from this viewpoint, in a case of the embodiment, variation of the performance for absorbing the shock load can be suppressed.

### [SECOND EMBODIMENT]

A second embodiment of the present invention will be described with reference to FIG. 8.

In a case of the embodiment, three slits 25a, 25a are provided on both side portions in a width direction, which interpose a central portion in the width direction at an upper half portion, of a front half portion of an outer column 12b. The three slits 25a, 25a only extend in an axial direction and are separately provided in an axial direction with each other. According to this configuration, in a case of the embodiment, the lower end portions of the pair of coupling plate parts 28 configuring a column side bracket 16b are brought into contact with only three portions, which are located at the same positions as the slits 25a, 25a with respect to the axial direction of the outer column 12b, of an outer peripheral surface of the outer column 12b. Three portions of the coupling plate parts 28 are fixed to the outer peripheral surface of the outer column 12b in a similar manner with the case of the first embodiment described above. Outer end portions of the slits 25a, 25a in the axial direction positioned on both sides in a front-rear direction are positioned axially outward from both axial ends of the pair of the side plate parts 26, 26.

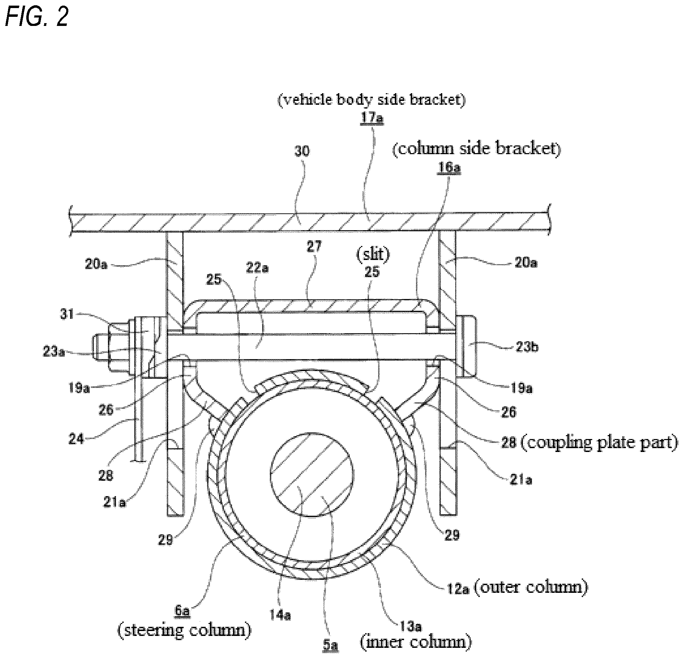

In a case of the embodiment having such a configuration, in a case where the interval between the pair of the pressing parts 23a, 23b (refer to FIG. 2) is contracted so as to hold the steering wheel 1 (refer to FIG. 1) at the adjusted position, the outer column 12b is strongly pressed radially inward by the three portions of lower end portions of the two coupling plate parts 28 in the axial direction. In a case of the embodiment, in this state, portions, which exists in a same axial range as the slits 25a and 25a, of the inner peripheral surface of the outer column 12b are brought into strong contact with the outer peripheral surface of the inner column 13a, portions, which exists in an axial range adjacent to both sides of the slits 25a, 25a in the front-rear direction, of the inner peripheral surface of the outer column 12b, are also brought into strong contact with the outer peripheral surface of the inner column 13a. That is, in FIG. 8, three portions (α portions) surrounded by dashed lines illustrate portions where the inner column 13a is pressed by the inner peripheral surface of the outer column 12b and is greatly elastically deformed. The elastic deformation of the inner column 13a in these portions (α portions) extends to not only in the same axial range as the slits 25a, 25a but also in an axial range adjacent to both slits 25a, 25a in the front-rear direction. On the other hand, in the axial range adjacent to the both sides of the slits 25a, 25a in the front-rear direction of the outer column 12b, the rigidity in the radial direction is improved compared with the same axial range as the slits 25a, 25a. Accordingly, in the axial range adjacent to the both sides of the slits 25a, 25a in the front-rear direction of these portions (α portions), when the outer peripheral surface of the inner column 13a is stretched to (abutted against) the inner peripheral surface of the outer column 12b as the inner column 13a is elastically deformed, the two peripheral surfaces are brought into strong contact with each other. Therefore, in a case of the embodiment, it is possible to sufficiently improve the rigidity of the steering column 6a.

### [THIRD EMBODIMENT]

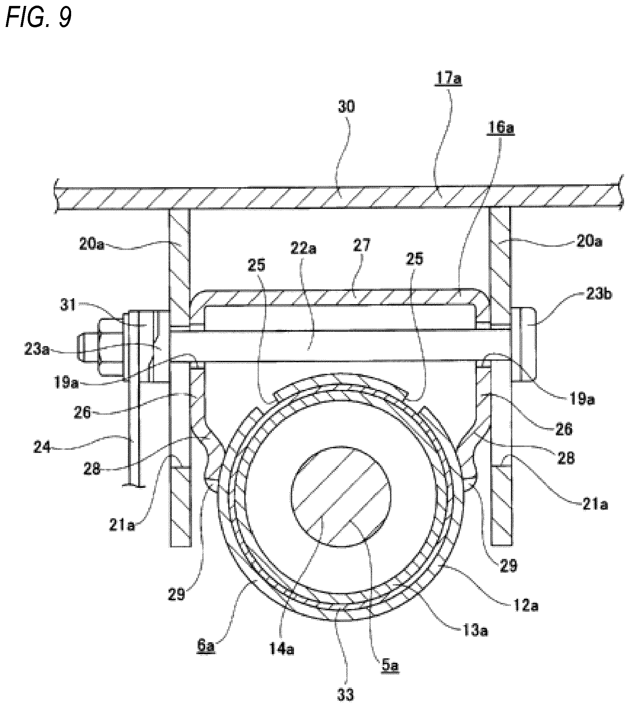

A third embodiment of the present invention will be described with reference to FIG. 9.

In a case of the embodiment, as a cylindrical sandwiched member 33 made of synthetic resin is arranged between the inner peripheral surface of the outer column 12a and the outer peripheral surface of the inner column 13a, the inner peripheral surface of the outer column 12a and the outer peripheral surface of the inner column 13a are brought into contact with each other through the sandwiched member 33. In the embodiment, the sandwiched member 33 is fixed to the outer peripheral surface of the inner column 13a, and instead of this, the sandwiched member 33 may be fixed to the inner peripheral surface of the outer column 12a.

In a case of the embodiment having such a configuration, even in a case where burrs are generated toward radially inward at peripheral portions of a pair of slits 25, 25 of the outer column 12a, since the burrs are not brought into contact with the outer peripheral surface of the inner column 13a, it is possible to sufficiently suppress deterioration of sliding characteristics between the outer column 12a and the inner column 13a upon a secondary collision.

When a configuration, in which the sandwiched member 33 is incorporated in the same manner as the embodiment, is adopted to the structure, in which a portion extending in a peripheral direction exists at a portion of the slits 25, 25 provided on the outer column 12a, of the Comparative Example shown in above-described FIG. 6, it is possible to sufficiently suppress variations in shock absorbing performance upon the secondary collision.

Other configurations and operations are the same as the first and second embodiments described above.

### [FOURTH AND FIFTH EMBODIMENTS]

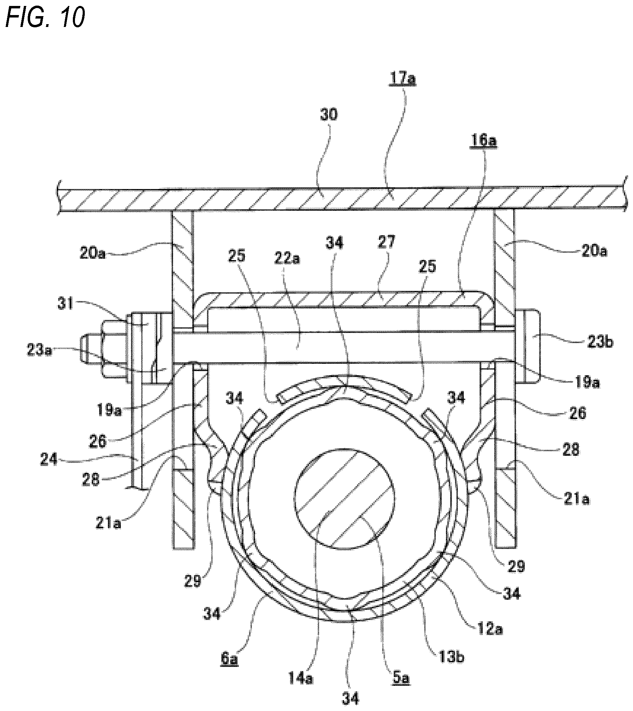

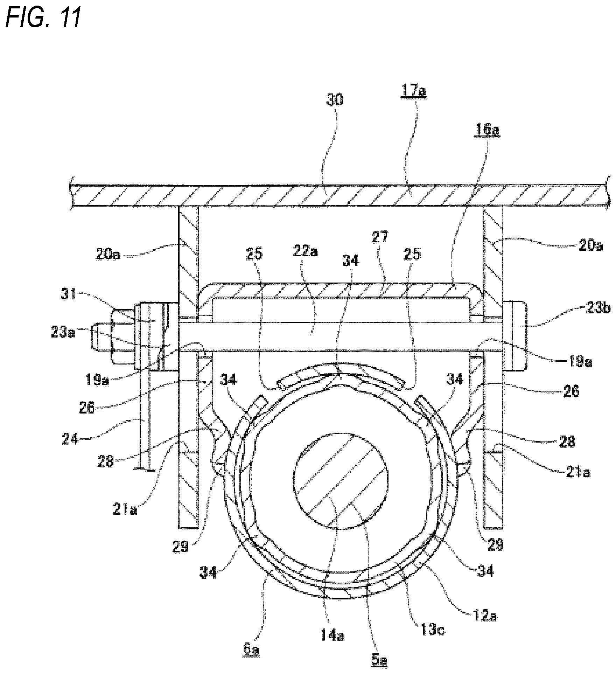

Fourth and fifth embodiments of the present invention will be described with reference to FIGS. 10 and 11.

In the fourth and fifth embodiments of the present invention, expanding portions (convex portions) 34, 34 which expand radially outward are formed on a plurality of portions (six portions in a case of the fourth embodiment shown in FIG. 10, five portions in a case of the fifth embodiment shown in FIG. 11) of the inner column 13b (13c) which are separated in a circumferential direction at least in an axial range in which the inner column 13b (13c) is fitted into the outer column 12a. The expanding portions 34, 34 extend in an axial direction respectively. The outer peripheral surface of the inner column 13b (13c) and the inner peripheral surface of the outer column 12a are only brought into contact in portions corresponding to the expanding portions 34, 34, and gaps are formed between the outer peripheral surface of the inner column 13b (13c) and the inner peripheral surface of the outer column 12a in the other portions. The expanding portions 34, 34 are arranged at equal intervals in the circumferential direction in a case of the fourth embodiment, and arranged at irregular intervals in the circumferential direction in a case of the fifth embodiment (to be precise, the arranged interval at the lower end portion is larger than the arranged interval at the other portion). In any case, the expanding portions 34, 34 are arranged in circumferential positions which are different from portions where the pair of the coupling plate parts 28, 28 configuring the column side bracket 16a is fixed to the outer peripheral surface of the outer column 12a (further, the expanding portions 34, 34 are arranged in circumferential positions which are different from portions where the slits 25, 25 are formed).

In a case of the fourth and fifth embodiments each having such a configuration, based on the presence of the expanding portions 34, 34, positions where the inner peripheral surface of the outer column 12a and the outer peripheral surface of the inner column 13b (13c) are brought into contact with each other and positions where the two coupling plate parts 28, 28 are fixed to (in contact with) the outer peripheral surface of the outer column 12a are shifted in the circumferential direction. Accordingly, it is possible to increase an amount of elastic deformation of the outer column 12a occurring in a case where the interval between the pair of the pressing portions 23a, 23b is contracted with a predetermined load so as to hold the steering wheel 1 (refer to FIG. 1) in the adjusted position,. As a result, regardless of error in size and shape of each component configuring the steering device, it is possible to suppress variations in the force of the outer column 12a which holds the inner column 13b (13c).

Other configurations and operations are the same as the first and second embodiments described above.

### [SIXTH EMBODIMENT]

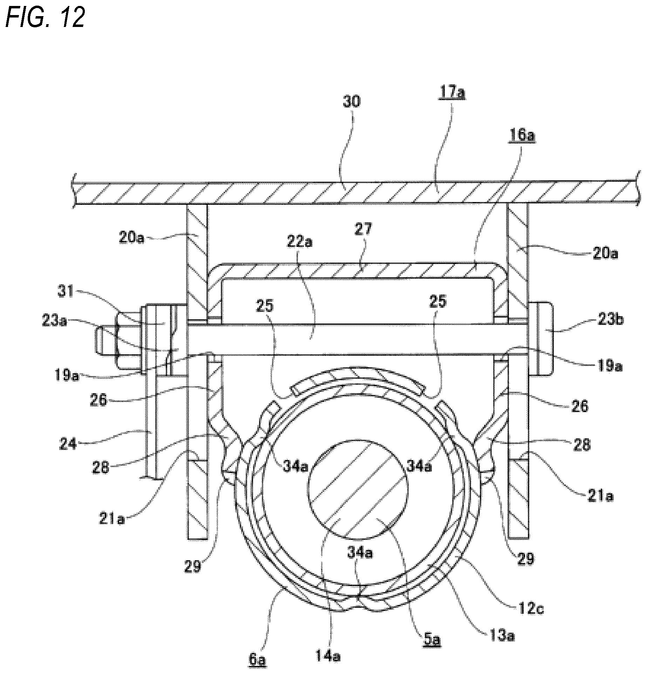

A sixth embodiment of the present invention will be described with reference to FIG. 12.

In the embodiment, the expanding portions 34, 34 which expand radially inward are formed on the plurality of portions (the three portions in the drawing) of the outer column 12c which is separated in the circumferential direction at least in the axial range in which the outer column 12c is fitted into the inner column 13a. The expanding portions 34, 34 extend in the axial direction respectively. The inner peripheral surface of the outer column 12c and the outer peripheral surface of the inner column 13a are only brought into contact with portions corresponding to the expanding portions 34a, 34a, and gaps are formed between the inner peripheral surface of the outer column 12a and the outer peripheral surface of the inner column 13a in the other portions,. The expanding portions 34a, 34a are arranged in circumferential positions which are different from portions where the pair of the coupling plate parts 28, 28 configuring the column side bracket 16a is fixed to the outer peripheral surface of the outer column 12c (further, the expanding portions 34a, 34a are arranged in circumferential positions which are different from portions where the slits 25, 25 are formed). The expanding portions 34a, 34a are arranged at equal intervals in the circumferential direction, and the expanding portions 34a, 34a may be arranged at irregular intervals in the circumferential direction.

In a case of the sixth embodiment having such a configuration, based on the presence of the expanding portions 34a, 34a, positions where the inner peripheral surface of the outer column 12c and the outer peripheral surface of the inner column 13a are brought into contact with each other and positions where the two coupling plate parts 28, 28 are fixed to (in contact with) the outer peripheral surface of the outer column 12c are shifted in the circumferential direction. Accordingly, it is possible to increase an amount of elastic deformation of the outer column 12c occurring in a case where the interval between the pair of the pressing portions 23a, 23b is contracted with the predetermined load so as to hold the steering wheel 1 (refer to FIG. 1) in the adjusted position,. As a result, regardless of error in size and shape of each component configuring the steering device, it is possible to suppress variations in the force that the outer column 12c grips the inner column 13a.

Other configurations and operations are the same as the first and second embodiments described above.

### [SEVENTH EMBODIMENT]

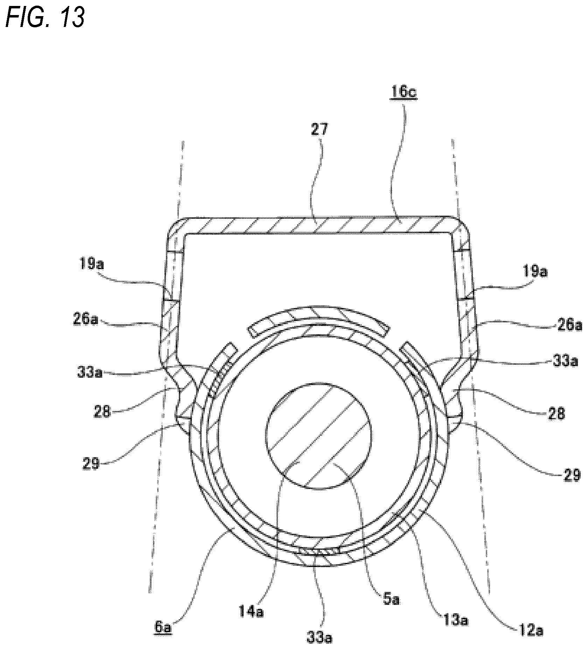

A seventh embodiment of the present invention will be described with reference to FIG. 13.

In the embodiment, sandwiched members 33a, 33a which extend in an axial direction respectively and are made of synthetic resin are arranged in a plurality of portions separated in a circumferential direction between the inner peripheral surface of the outer column 12a and the outer peripheral surface of the inner column 13a. Accordingly, the inner peripheral surface of the outer column 12a and the outer peripheral surface of the inner column 13a are brought into contact with each other through sandwiched members 33a, 33a corresponding to another members of the present invention, and gaps are formed between the inner peripheral surface of the outer column 12a and the outer peripheral surface of the inner column 13a in portions apart from the sandwiched members 33a, 33a in the circumferential direction,. In a case of the embodiment, the sandwiched members 33a, 33a are fixed to the outer peripheral surface of the inner column 13a, and instead of this, the sandwiched members 33a, 33a may be fixed to the inner peripheral surface of the outer column 12a. The sandwiched members 33a, 33a are arranged in circumferential positions which are different from portions where the pair of the coupling plate parts 28, 28 configuring the column side bracket 16a is fixed to the outer peripheral surface of the outer column 12a (further, he sandwiched members 33a, 33a are arranged in circumferential positions which are different from portions where the slits 25, 25 are formed). In a case of the embodiment, the sandwiched members 33a, 33a are arranged at equal intervals in the circumferential direction, and the sandwiched members 33a, 33a may be arranged at irregular intervals in the circumferential direction.

In a case of the embodiment, outer side surfaces of two side wall parts 26a, 26a in the width direction, which are pressed by the inner side surfaces of the pair of support plate parts 20a, 20a (refer to FIG. 2) in the width direction configuring the vehicle body side bracket 17a and configure a column side bracket 16c, are inclined in a direction facing an outer side in the width direction as it goes from an end edge on a side (upper side) far from the outer column 12a in the upper-lower direction toward an end edge on a side (lower side) close to the outer column 12a in the upper-lower direction.

In a case of the embodiment having such a configuration, positions where the inner peripheral surface of the outer column 12a and the outer peripheral surface of the inner column 13a are brought into contact with each other through the sandwiched members 33a, 33a and the positions where two coupling plate parts 28, 28 are fixed to (in contact with) the outer peripheral surface of the outer column 12a are shifted in the circumferential direction. Accordingly, it is possible to increase the amount of elastic deformation of the outer column 12a occurring in a case where the interval between the pair of the pressing portions 23a, 23b (refer to FIG. 2) is contracted with the predetermined load so as to hold the steering wheel 1 (refer to FIG. 1) in the adjusted position. As a result, regardless of error in size and shape of each component configuring the steering device, it is possible to suppress variations in the force of the outer column 12a which holds the inner column 13a.

In a case of the embodiment, the outer side surfaces of the pair of the two side wall parts 26a, 26a in the width direction which configures the column side bracket 16care inclined in a direction which faces an outer side in the width direction as it goes from the end edge on the side (upper side) far from the outer column 12a in the upper-lower direction toward the end edge on the side (lower side) close to the outer column 12a in the upper-lower direction. Accordingly, in a case where the interval between the pair of the pressing portions 23a, 23b (refer to FIG. 2) is contracted with the predetermined load so as to hold the steering wheel 1 (refer to FIG. 1) in the adjusted position, it is possible to effectively transmit the load to the outer column 12a through the two coupling plate parts 28, 28. As a result, the outer column 12a can be easily elastically deformed. The interval between the pair of the pressing parts 23a, 23b is contracted by clamping, the pair of the support plate parts 20, 20 and the pair of the side plate parts 26a, 26a are brought into surface-contact with each other.

Other configurations and operations are the same as the first and second embodiments described above.

### INDUSTRIAL APPLICABILITY

When implementing the present invention, slits which only extend in an axial direction respectively may be provided on both side portions in a width direction which interpose a central portion on a front half portion of an outer column in the width direction. A column side bracket fixed to an outer peripheral surface of the outer column may be arranged on a lower side of the outer column.

The steering device of the present invention may omit a tilt mechanism and have a structure including only a telescopic mechanism. In this case, through holes provided in a pair of support plate parts configuring a vehicle side bracket is, for example, simple round holes.

In the steering device of the present invention, the outer column may be arranged on a front side and the inner column may be arranged on a rear side.

Penetration holes provided on the column side bracket of the present invention may be, for example, simple round holes.

Other configurations and operations are the same as the first and second embodiments described above.

This application is based on a Japanese Patent Application No. 2015-207964, filed October 22, 2015.

### DESCRIPTION OF REFERENCE NUMERALS

- 1:: steering wheel
- 2:: steering gear unit
- 3:: input shaft
- 4:: tie rod
- 5, 5a:: steering shaft
- 6, 6a:: steering column
- 7:: universal joint
- 8:: intermediate shaft
- 9:: universal joint
- 10:: vehicle body
- 11:: pivot shaft
- 12, 12a, 12b, 12c:: outer column
- 13, 131, 13b, 13c:: inner column
- 14, 14a:: outer shaft
- 15, 15a:: inner shaft
- 16, 16a, 16c:: column side bracket
- 17, 17a:: vehicle body side bracket
- 18:: electric motor
- 19, 19a:: telescopic adjustment long hole
- 20, 20a:: support plate part
- 21, 21a:: tilt adjustment long hole
- 22, 22a:: adjustment rod
- 23a, 23b:: pressing part
- 24:: adjustment lever
- 25, 25a:: slit
- 26, 26a:: side plate part
- 27:: connecting plate part
- 28:: coupling plate part
- 29:: welding part
- 30:: mounting plate part
- 31:: drive-side cam
- 32:: peripheral extending part
- 33, 33a:: sandwiched member
- 34, 34a:: expanding portion

## Claims

1. An outer column with a bracket comprising:
a tubular outer column (12a); and
a column side bracket (16a) fixed to the outer column (12a),
wherein the outer column comprises slits (25) configured to lower a rigidity of the outer column (12a) in a radial direction,
wherein the slits (25) are provided on both side portions in a width direction, which interpose a central portion in the width direction on a half portion of one side in an upper-lower direction, of the outer column (12a) in a state where the slits (25) extend only in an axial direction respectively, and
wherein the column side bracket (16a) comprises:
a pair of side wall parts (26, 28) which fixed to positions, which interpose each of the slits (25) therebetween from both sides in the width direction, of an outer peripheral surface of the outer column (12a); and
a penetration hole (19a) provided on portions, which face each other in the width direction, of the two side wall parts (26, 28)
**characterized in that**
welding parts (29) are provided to fix the two side wall parts (26, 28) to the outer peripheral surface of the outer column (12a) respectively in a state where the welding parts (29) bridge between:
portions, which is adjacent to an opposite side of the slits (25) in the circumferential direction with respect to the two side wall parts (26, 28), of the outer peripheral surface of the outer column (12a); and
the two side wall parts (26, 28).

2. The outer column with the bracket according to claim 1,
wherein a plurality of the slits (25) are provided separately in the axial direction on two side portions in the width direction, which interpose a central portion in the width direction, of the outer column (12a),
wherein the two side wall parts (26, 28) are fixed to the outer peripheral surface of the outer column (12a) at a plurality of portions located at same positions as the slits (25) in an axial direction of the outer column (12a).

3. The outer column with the bracket according to claim 1 or claim 2,
wherein outer side surfaces of the two side wall parts (26, 28) in the width direction configure a vehicle side bracket (17a) supported to a vehicle body, and are pressed by inner side surfaces in the width direction of a pair of support plate parts (20a) separated in the width direction, and
wherein outer side surfaces of the two side wall parts (26, 28) in the width direction are inclined in a direction facing an outer side in the width direction as it goes from an end edge on a side far from the outer column (12a) in an upper-lower direction toward an end edge on a side close to the outer column (12a) in the upper-lower direction.

4. The outer column with the bracket according to any one of claims 1 to 3,
wherein the penetration hole (19a) is a telescopic adjustment long hole which extends in the axial direction of the outer column (12a).

5. The outer column with the bracket according to any one of claims 1 to 4,
wherein an intermediate portion of the slit (25) in a longitudinal direction is formed with a constant circumferential width, and
wherein both end portions of the slit (25) in the longitudinal direction is formed such that a circumferential width is narrowed toward both end edges in the longitudinal direction.

6. A steering column (6a) with the bracket (16a) comprising:
a tubular inner column (13a); and
the outer column (12a) with the bracket (16a) according to any one of claims 1 to 3,
wherein the outer column (12a) is externally fitted to the inner column (13a) in an axial position where the column side bracket (16a) exists so that the outer column (12a) is relatively displaceable with respect to the inner column (13a).

7. A steering column with the bracket according to claim 6,
wherein in the axial position where the column side bracket (16a) exists, an inner peripheral surface of the outer column (12a) and an outer peripheral surface of the inner column (13a) are brought into contact with each other directly or through other members only at a plurality of positions separated in the circumferential direction, and positions where the inner peripheral surface of outer column (12a) and the outer peripheral surface of the inner column (13a) are brought into contact with each other directly or through other members and positions where the two side wall parts are fixed to the outer peripheral surface of the outer column (12a) are shifted with each other in the circumferential direction.

8. A steering column with the bracket according to claim 6 or 7,
wherein the inner peripheral surface of the outer column (12a) and the outer peripheral surface of the inner column (13a) are brought into contact with each other through a sandwiched member (33a) made of synthetic resin.

9. A steering device comprising:
the steering column (6a) with the bracket (16a) according to any one of claims 6 to 8;
a vehicle body side bracket (17a) supported to the vehicle body and comprising:
a pair of support plate parts (20a) provided on positions where the column side bracket (16a) is interposed therebetween from both sides in the width direction; and
through holes (21a) provided on portions, which face each other in the width direction, of the two support plate parts;
an adjustment rod (22a) inserted into the two penetration holes (19a) and two through holes (21a);
a pair of the pressing parts (23a, 23b) provided on both end portions, which protrude from the outer side surfaces of the two support plate parts (20a) in the width direction, of the adjustment rod (22a); and
an expansion/contraction mechanism capable of expanding and contracting an interval between the pressing parts (23a, 23b).

## Patentansprüche

1. Außensäule mit einer Halterung, umfassend:
eine rohrförmige Außensäule (12a); und
eine säulenseitige Halterung (16a), die an der Außensäule (12a) befestigt ist,
wobei die Außensäule Schlitze (25) umfasst, die konfiguriert sind, eine Steifigkeit der Außensäule (12a) in einer radialen Richtung zu verringern,
wobei die Schlitze (25) auf beiden Seitenabschnitten, die einen Mittelabschnitt in die Breitenrichtung auf einem halben Abschnitt von einer Seite in eine Aufwärts-Abwärts-Richtung einschließen, in eine Breitenrichtung der Außensäule (12a) in einem Zustand bereitgestellt sind, in dem sich die Schlitze (25) jeweils lediglich in eine axiale Richtung erstrecken, und
wobei die säulenseitige Halterung (16a) Folgendes umfasst:
ein Paar von Seitenwandteilen (26, 28), die an Positionen, die jeden von den Schlitzen (25) von beiden Seiten in die Breitenrichtung einschließen, einer Außenumfangsfläche der Außensäule (12a) befestigt sind; und
ein Durchdringungsloch (19a), das auf Abschnitten, die einander in Breitenrichtung zugewandt sind, der zwei Seitenwandteile (26, 28) bereitgestellt ist,
**dadurch gekennzeichnet,**
**dass** Schweißteile (29) bereitgestellt sind, um die zwei Seitenwandteile (26, 28) an der Außenumfangsfläche der Außensäule (12a) jeweils in einem Zustand zu befestigen, in dem die Schweißteile (29) eine Brücke zwischen Folgendem bilden:
Abschnitten, die an einer gegenüberliegenden Seite der Schlitze (25) in Umfangsrichtung mit Bezug auf die zwei Seitenwandteile (26, 28) der Außenumfangsfläche der Außensäule (12a) angrenzen; und
den zwei Seitenwandteilen (26, 28).

2. Außensäule mit der Halterung nach Anspruch 1,
wobei eine Vielzahl der Schlitze (25) in axialer Richtung auf zwei Seitenabschnitten, die in Breitenrichtung einen Mittelabschnitt einschließen, in Breitenrichtung der Außensäule (12a) separat bereitgestellt ist,
wobei die zwei Seitenwandteile (26, 28) an der Außenumfangsfläche der Außensäule (12a) an einer Vielzahl von Abschnitten befestigt sind, die an denselben Positionen wie die Schlitze (25) in eine axiale Richtung der Außensäule (12a) angeordnet sind.

3. Außensäule mit der Halterung nach Anspruch 1 oder Anspruch 2,
wobei Außenseitenflächen der zwei Seitenwandteile (26, 28) in die Breitenrichtung eine fahrzeugseitige Halterung (17a) konfigurieren, die an einem Fahrzeugkörper gelagert ist, und die durch Innenseitenflächen in Breitenrichtung eines Paars von in Breitenrichtung getrennten Stützplattenteilen (20a) gedrückt werden, und
wobei Außenseitenflächen der zwei Seitenwandteile (26, 28) in die Breitenrichtung in eine Richtung geneigt sind, die einer Außenseite in Breitenrichtung zugewandt ist, wobei diese von einer Endkante auf einer von der Außensäule (12a) entfernt angeordneten Seite in einer Aufwärts-Abwärts-Richtung zu einer Endkante auf einer zur Außensäule (12a) nahe angeordneten Seite in Aufwärts-Abwärts-Richtung verläuft.

4. Außensäule mit der Halterung nach einem der Ansprüche 1 bis 3,
wobei das Durchdringungsloch (19a) ein Teleskopeinstell-Langloch ist, das sich in axialer Richtung der Außensäule (12a) erstreckt.

5. Außensäule mit der Halterung nach einem der Ansprüche 1 bis 4,
wobei ein Zwischenabschnitt des Schlitzes (25) in Längsrichtung mit einer konstanten Umfangsbreite ausgebildet ist, und
wobei beide Endabschnitte des Schlitzes (25) in Längsrichtung derart ausgebildet sind, dass eine Umfangsbreite in Richtung von beiden Endkanten in Längsrichtung schmäler wird.

6. Lenksäule (6a) mit der Halterung (16a), umfassend:
eine rohrförmige Innensäule (13a); und
die Außensäule (12a) mit der Halterung (16a) nach einem der Ansprüche 1 bis 3,
wobei die Außensäule (12a) außen an der Innensäule (13a) in einer axialen Position angebracht ist, in der die säulenseitige Halterung (16a) derart vorhanden ist, dass die Außensäule (12a) mit Bezug auf die Innensäule (13a) relativ verschiebbar ist.

7. Lenksäule mit der Halterung nach Anspruch 6,
wobei in der axialen Position, in der die säulenseitige Halterung (16a) vorhanden ist, eine Innenumfangsfläche der Außensäule (12a) und eine Außenumfangsfläche der Innensäule (13a) direkt oder durch andere Elemente miteinander in Kontakt gebracht sind, und zwar lediglich an einer Vielzahl von Positionen, die in Umfangsrichtung getrennt sind, und Positionen, in denen die Innenumfangsfläche der Außensäule (12a) und die Außenumfangsfläche der Innensäule (13a) direkt oder durch andere Elemente miteinander in Kontakt gebracht werden, und Positionen, in denen die zwei Seitenwandteile an der Außenumfangsfläche der Außensäule (12a) befestigt sind, zueinander in Umfangsrichtung verlagert werden.

8. Lenksäule mit der Halterung nach Anspruch 6 oder 7,
wobei die Innenumfangsfläche der Außensäule (12a) und die Außenumfangsfläche der Innensäule (13a) durch ein sandwichartig angeordnetes Element (33a), das aus Kunstharz hergestellt ist, miteinander in Kontakt gebracht sind.

9. Lenkvorrichtung, umfassend:
die Lenksäule (6a) mit der Halterung (16a) nach einem der Ansprüche 6 bis 8;
eine fahrzeugkörperseitige Halterung (17a), die am Fahrzeugkörper gelagert ist und Folgendes umfasst:
ein Paar von Stützplattenteilen (20a), die an Positionen bereitgestellt sind, in denen die säulenseitige Halterung (16a) zwischen diesen von beiden Seiten in Breitenrichtung eingeschlossen ist; und
Durchgangslöcher (21a), die auf einander in Breitenrichtung zugewandten Abschnitten der zwei Stützplattenabschnitte bereitgestellt sind;
einen Einstellstab (22a), der in den zwei Durchdringungslöchern (19a) und den zwei Durchgangslöchern (21a) eingebracht ist;
ein Paar von Andruckteilen (23a, 23b), die auf beiden Endabschnitten des Einstellstabs (22a), die von den Außenseitenflächen der zwei Stützplattenteile (20a) in Breitenrichtung vorstehen, bereitgestellt sind; und
einen Expansions-/Kontraktions-Mechanismus, der für ein Ausdehnen und Zusammenziehen eines Abstands zwischen den Andruckteilen (23a, 23b) geeignet ist.

## Revendications

1. Colonne extérieure avec un support comprenant :
une colonne extérieure tubulaire (12a) ; et
un support côté colonne (16a) fixé à la colonne extérieure (12a),
dans laquelle la colonne extérieure comprend des fentes (25) configurées pour abaisser une rigidité de la colonne extérieure (12a) dans une direction radiale,
dans laquelle les fentes (25) sont prévues sur les deux parties latérales dans une direction de largeur, qui interposent une partie centrale dans la direction de largeur sur une demi-partie d'un côté dans une direction vers le haut-vers le bas de la colonne extérieure (12a) dans un état où les fentes (25) ne s'étendent que dans une direction axiale, respectivement, et
dans laquelle le support côté colonne (16a) comprend :
une paire de parties de paroi latérale (26, 28) qui se fixent dans des positions, qui interposent chacune des fentes (25) entre elles à partir des deux côtés dans la direction de largeur, d'une surface périphérique extérieure de la colonne extérieure (12a) ; et
un trou de pénétration (19a) prévu sur des parties, qui se font face dans la direction de largeur, des deux parties de paroi latérale (26, 28),
**caractérisé en ce que**
des pièces de soudage (29) sont prévues pour fixer les deux parties de paroi latérale (26, 28) à la surface périphérique extérieure de la colonne extérieure (12a) respectivement dans un état où les pièces de soudage (29) forment un pont entre :
des parties, qui sont adjacentes à un côté opposé des fentes (25) dans la direction circonférentielle par rapport aux deux parties de paroi latérale (26, 28), de la surface périphérique extérieure de la colonne extérieure (12a) ; et
les deux parties de paroi latérale (26, 28).

2. Colonne extérieure avec le support selon la revendication 1,
dans laquelle une pluralité de fentes (25) sont prévues séparément dans la direction axiale sur deux parties latérales dans la direction de largeur, qui interposent une partie centrale dans la direction de largeur, de la colonne extérieure (12a),
dans laquelle les deux parties de paroi latérale (26, 28) sont fixées à la surface périphérique extérieure de la colonne extérieure (12a) au niveau d'une pluralité de parties situées aux mêmes positions que les fentes (25) dans une direction axiale de la colonne extérieure (12a).

3. Colonne extérieure avec le support selon la revendication 1 ou la revendication 2,
dans laquelle des surfaces latérales extérieures des deux parties de paroi latérale (26, 28) dans la direction de largeur configurent un support latéral de véhicule (17a) supporté par une carrosserie de véhicule, et sont pressées par des surfaces latérales intérieures dans la direction de largeur d'une paire de parties de plaque de support (20a) séparées dans la direction de largeur, et
dans laquelle des surfaces latérales extérieures des deux parties de paroi latérale (26, 28) dans la direction de largeur sont inclinées dans une direction faisant face à un côté extérieur dans la direction de largeur lorsqu'elles partent d'un bord d'extrémité situé sur un côté éloigné de la colonne extérieure (12a) dans une direction vers le haut-vers le bas vers un bord d'extrémité situé sur un côté proche de la colonne extérieure (12a) dans la direction vers le haut-vers le bas.

4. Colonne extérieure avec le support selon l'une quelconque des revendications 1 à 3,
dans laquelle le trou de pénétration (19a) est un trou long d'ajustement télescopique qui s'étend dans la direction axiale de la colonne extérieure (12a).

5. Colonne extérieure avec le support selon l'une quelconque des revendications 1 à 4, dans laquelle une partie intermédiaire de la fente (25) dans une direction longitudinale est formée avec une largeur circonférentielle constante, et
dans laquelle les deux parties d'extrémité de la fente (25) dans la direction longitudinale sont formées de sorte qu'une largeur circonférentielle est rétrécie vers les deux bords d'extrémité dans la direction longitudinale.

6. Colonne de direction (6a) avec le support (16a) comprenant :
une colonne intérieure tubulaire (13a) ; et
la colonne extérieure (12a) avec le support (16a) selon l'une quelconque des revendications 1 à 3,
dans laquelle la colonne extérieure (12a) est ajustée de manière externe à la colonne intérieure (13a) dans une position axiale où le support côté colonne (16a) existe de sorte que la colonne extérieure (12a) peut être déplacée de manière relative par rapport à la colonne intérieure (13a).

7. Colonne de direction avec le support selon la revendication 6,
dans laquelle dans la position axiale où le support côté colonne (16a) existe, une surface périphérique intérieure de la colonne extérieure (12a) et une surface périphérique extérieure de la colonne intérieure (13a) sont mises en contact l'une avec l'autre directement ou par l'intermédiaire d'autres éléments uniquement dans une pluralité de positions séparées dans la direction circonférentielle, et de positions où la surface périphérique intérieure de la colonne extérieure (12a) et la surface périphérique extérieure de la colonne intérieure (13a) sont mises en contact l'une avec l'autre directement ou par l'intermédiaire d'autres éléments, et de positions où les deux parties de paroi latérale sont fixées à la surface périphérique extérieure de la colonne extérieure (12a) sont décalées l'une par rapport à l'autre dans la direction circonférentielle.

8. Colonne de direction avec le support selon la revendication 6 ou 7,
dans laquelle la surface périphérique intérieure de la colonne extérieure (12a) et la surface périphérique extérieure de la colonne intérieures (13a) sont amenées en contact l'une avec l'autre à travers un élément enserré (33a) réalisé en résine synthétique.

9. Dispositif de direction comprenant :
la colonne de direction (6a) avec le support (16a) selon l'une quelconque des revendications 6 à 8 ;
un support côté carrosserie de véhicule (17a) supporté par la carrosserie de véhicule et comprenant :
une paire de parties de plaque de support (20a) prévues dans des positions où le support côté colonne (16a) est interposé entre elles à partir des deux côtés dans la direction de largeur ; et
des trous traversants (21a) prévus sur des parties, qui se font face l'une l'autre dans la direction de largeur, des deux parties de plaque de support ;
une tige d'ajustement (22a) insérée dans les deux trous de pénétration (19a) et deux trous traversants (21a) ;
une paire des parties de pressage (23a, 23b) prévues sur les deux parties d'extrémité, qui font saillie depuis les surfaces latérales extérieures des deux parties de plaque de support (20a) dans la direction de largeur, de la tige d'ajustement (22a) ; et
un mécanisme d'expansion/contraction capable d'élargir et de réduire un intervalle entre les parties de pressage (23a, 23b).
